# EUROPEAN PATENT APPLICATION

(11) **EP 4 579 581 A1**
(43) Date of publication of application: **02.07.2025**
(21) Application number: 22956435.6
(22) Date of filing: 23.08.2022
(51) Int. Cl.: G06T 7/00, G08G 1/16

(54) **EXTERNAL WORLD RECOGNITION DEVICE AND EXTERNAL WORLD RECOGNITION METHOD**

(71) Applicant: Hitachi Astemo, Ltd., Ibaraki 312-8503 (JP)
(72) Inventor: TAKEMURA Masayuki, Hitachinaka-shi, Ibaraki 312-8503 (JP); SHIMA Takeshi, Hitachinaka-shi, Ibaraki 312-8503 (JP)
(74) Representative: MERH-IP Matias Erny Reichl Hoffmann Patentanwälte PartG mbB
(86) International application number: PCT/JP2022/031694
(87) International publication number: WO 2024/042607

(57) **Abstract**

An external environment recognition device includes:
a texture area segmentation unit that segments external environment information into a plurality of texture areas for individual textures specified from the external environment information acquired from an external environment information acquisition unit; a parallax generation unit that generates a parallax according to a depth distance of an external environment, based on the external environment information; a parallax voting unit that votes a parallax according to a depth distance of an object, the depth distance being specified from the external environment information, in a voting space having one axis representing the depth distance of the external environment; an additional parallax voting unit that votes an additional parallax in the voting space in which the parallax has been voted, the additional parallax being voted based on a texture area; and an object detection unit that detects the object, based on the number of parallax votes given in the voting space, thereby recognizing the external environment.

## Description

### Technical Field

The present invention relates to an external environment recognition device and an external environment recognition method.

### Background Art

In realization of autonomous driving and an advanced driver assistance system, the importance of an external environment recognition device is increasing, which external environment recognition device monitors an external environment of a vehicle, detects an obstacle on a traveling path and an object necessary for traveling of the vehicle, such a lane on the traveling route, thus recognizing the external environment. To improve object detection performance, according to this external environment recognition device, a vehicle is equipped with a plurality of cameras (stereo cameras), and information on the surroundings of the vehicle is obtained through each camera by photographing. The external environment recognition device thus offers a function of recognizing a situation around the vehicle.

Stereo cameras used by the external environment recognition device are incorporated in the vehicle such that two stereo cameras are arranged at a given interval in the horizontal direction. The external environment recognition device measures the distance from the camera to an object photographed, using a parallax of an overlapping area of images captured by the two cameras, thereby determining a possibility of coming in contact with the object present in the direction of traveling of the vehicle. However, various objects are present in the external environment, and the vehicle needs a lot of information for its autonomous driving. Thus, a technique that allows the vehicle to correctly recognize the external environment is in great demand.

PTL 1 includes this description: "Further, the calculation unit performs object detection, based on visual information, and the control unit controls a moving body so that a detected object appears at a given position in the visual information. Further, the holding unit holds an object model for object detection and holds a target positional orientation relative to the object as well, the target positional orientation indicating the positional orientation that should be taken relative to the object when the AGV arrives at the destination".

### Citation List

### Patent Literature

PTL 1: JP 2019-125345 A

### Summary of Invention

### Technical Problem

It can be assumed that a parallax image formed by a parallax obtained from two images is composed of a three-dimensional point group. A conventional external environment recognition device has difficulty in obtaining objects having no difference or a small difference in height with each other in spite of being different objects, from a parallax image. For example, if a level difference at a boundary between a roadway and a sidewalk or a median strip is low, the conventional external environment recognition device hardly detects a parallax at the boundary and is therefore not able to correctly detect the boundary from a parallax image. Similarly, in the case of an object of uniform texture (e.g., a black car), an object photographed at night, and the like, the conventional external environment recognition device has difficulty in detecting a parallax of such an object and, in many cases, finds a difference between the object and its background to be unclear, thus not being able to correctly detect the object. Even in the case of an object with a pattern in texture, the conventional external environment recognition device cannot detect such an object if its height is low.

According to the technique disclosed in Patent Literature 1, a specific object model needs to be held in advance, and an object cannot be correctly detect in an environment where various objects not defined by the object model, such as an outdoor roadway, are present. In addition, in the case of a road boundary with a small level difference or an object with a little texture difference (a black vehicle or the like), detecting such a road boundary or object is more difficult and therefore the technique disclosed in Patent Literature 1 cannot be applied to a control system for autonomous driving.

The present invention has been conceived in view of the above circumstances, and an object of the present invention is to enable detection of various objects that are difficult to detect by using only the information obtained from a parallax.

### Solution to Problem

An external environment recognition device according to the present invention includes: a texture area segmentation unit that segments external environment information into a plurality of texture areas for individual textures specified from the external environment information acquired from an external environment information acquisition unit; a parallax generation unit that generates a parallax according to a depth distance of an external environment, based on the external environment information; a parallax voting unit that votes a parallax according to a depth distance of an object, the depth distance being specified from the external environment information, in a voting space having one axis representing the depth distance of the external environment; an additional parallax voting unit that votes an additional parallax in the voting space in which the parallax has been voted, the additional parallax being added based on a texture area; and an object detection unit that detects the object, based on the number of parallax votes given in the voting space, thereby recognizing the external environment.

### Advantageous Effects of Invention

According to the present invention, the additional parallax added based on the texture area is voted in the voting space in which the parallax is voted. This allows correct detection of an object.

### Brief Description of Drawings

[FIG. 1] FIG. 1 is a block diagram showing an example of an internal configuration of an external environment recognition device according to one embodiment of the present invention.
[FIG. 2] FIG. 2 is a block diagram showing an example of a hardware configuration of a computer according to the one embodiment of the present invention.
[FIG. 3] FIG. 3 depicts an example of a distance frequency distribution in an area (road surface) where no three-dimensional object is present, according to the one embodiment of the present invention.
[FIG. 4] FIG. 4 depicts an example of a distance frequency distribution in an area where a three-dimensional object (preceding vehicle) is present, according to the one embodiment of the present invention.
[FIG. 5] FIG. 5 depicts an example of a parallax image and a UD voting space according to the one embodiment of the present invention.
[FIG. 6] FIG. 6 depicts an example of an original image captured by a stereo camera and a UD voting space according to the one embodiment of the present invention.
[FIG. 7] FIG. 7 is a block diagram showing an example of an internal configuration of a texture area segmentation unit according to the one embodiment of the present invention.
[FIG. 8] FIG. 8 is a block diagram showing an example of an internal configuration of an additional parallax voting unit according to the one embodiment of the present invention.
[FIG. 9] FIG. 9 depicts transition of individual images for description of semantic area segmentation according to the one embodiment of the present invention.
[FIG. 10] FIG. 10 depicts an example of voting results on individual images according to the one embodiment of the present invention.
[FIG. 11] FIG. 11 depicts an example in which obstacle interpolation voting is made after semantic area segmentation is performed, according to the one embodiment of the present invention.
[FIG. 12] FIG. 12 depicts an example of respective voting results on images according to the one embodiment of the present invention.
[FIG. 13] FIG. 13 depicts an example in which obstacle interpolation voting is performed after individual object area segmentation is made, according to the one embodiment of the present invention.
[FIG. 14] FIG. 14 is a diagram for explaining a process of recognizing a pylon, according to the one embodiment of the present invention.
[FIG. 15] FIG. 15 is a diagram for explaining a process on a plurality of texture areas included in the same object, according to the one embodiment of the present invention.
[FIG. 16] FIG. 16 is a diagram for explaining a process of confirming an individual object area having a size within a specified range, according to the one embodiment of the present invention.
[FIG. 17] FIG. 17 is a flowchart showing an example of a process carried out by the external environment recognition device according to the one embodiment of the present invention.

### Description of Embodiments

Embodiments of the present invention will hereinafter be described with reference to the accompanying drawings. In the present specification and drawings, constituent elements substantially identical in function or configuration are denoted by the identical reference signs to spare redundant description.

### [One Embodiment]

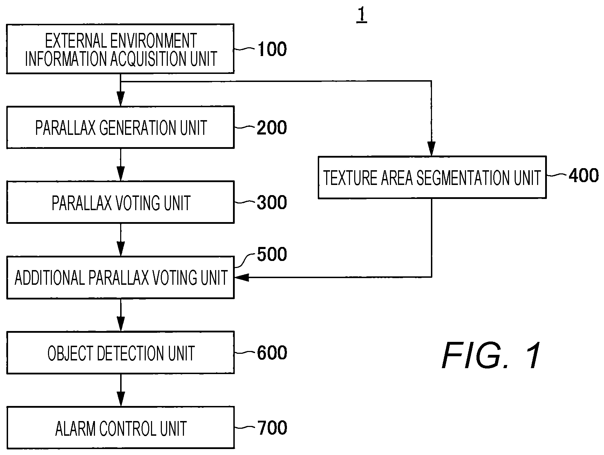

An example of an internal configuration of an external environment recognition device 1 according to one embodiment of the present invention will first be described with reference to FIG. 1.

FIG. 1 is a block diagram showing an example of the internal configuration of the external environment recognition device 1. The external environment recognition device 1 is a part of an electronic control unit (ECU) incorporated in a vehicle, and is a device that recognizes an object in the external environment, based on external environment information acquired in the direction of traveling of the vehicle. The vehicle having the external environment recognition device 1 incorporated therein is referred to as "host vehicle ". The present invention is applicable to, for example, an advanced driver assistance system (ADAS) or to an arithmetic device for vehicle control with which or an in-vehicle electronic control unit (ECU) for autonomous driving (AD) can communicate.

The external environment recognition device 1 includes an external environment information acquisition unit 100, a parallax generation unit 200, a parallax voting unit 300, a texture area segmentation unit 400, an additional parallax voting unit 500, an object detection unit 600, and an alarm control unit 700.

The external environment information acquisition unit (external environment information acquisition unit 100) acquires information detected by a sensing device and information detected by a different sensing device, as external environment information. The sensing device and the different sensing devices are set in the direction of traveling of the vehicle (that is, set on a front part and a rear part of the vehicle).

A configuration is assumed, in which the sensing device is a first camera and the different sensing device is a second camera set in the horizontal direction of the first camera. In this case, the first camera and second camera are used as stereo cameras, and the external environment information acquisition unit (external environment information acquisition unit 100) acquires external environment images captured by the first camera and second camera, as external environment information. Another configuration may also be assumed, in which the sensing device is a monocular camera and the different sensing device is a measuring device (Light Detection and Ranging (LiDAR), millimeter wave radar, infrared sensor, and the like) that measures a distance to an object, based on a distribution of a group of three-dimensional points, the distribution being obtained by emitting an electromagnetic wave (laser beam, millimeter wave, infrared rays, and the like) onto the object. In this case, the external environment information acquisition unit (external environment information acquisition unit 100) acquires an external environment image captured by the monocular camera and a distribution of a group of three-dimensional points, the distribution being outputted from the measuring device, as external environment information.

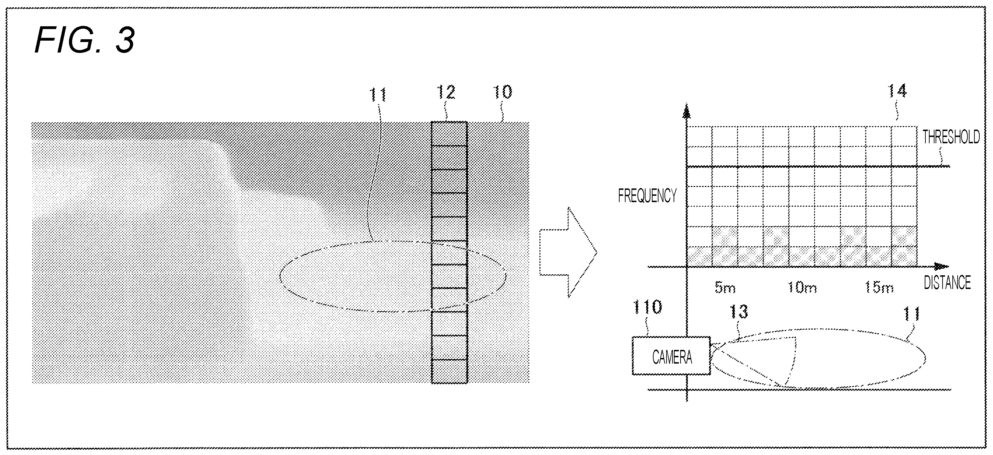

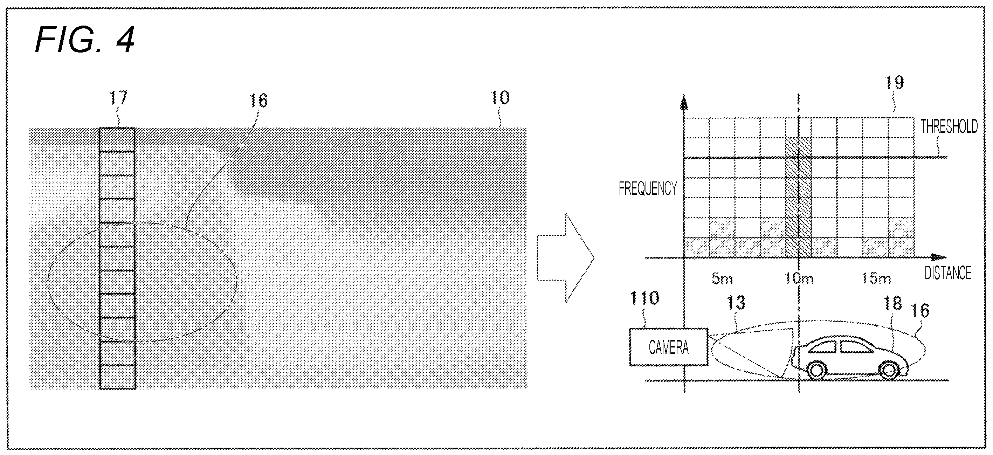

The parallax generation unit (parallax generation unit 200) generates a parallax according to the depth distance of the external environment, based on external environment information inputted from the external environment information acquisition unit 100. For example, the parallax generation unit 200 carries out pattern matching between two images simultaneously captured by the stereo cameras to generate a parallax of any given object in the images. A parallax generated by the parallax generation unit 200 is exemplarily shown as a parallax image 10 in FIGS. 3 and 4, which will be referred to later. The parallax image 10 includes distance information indicating a relative distance from the stereo camera to the object in a depth direction. In the following description, the relative distance from the stereo camera to the object in the depth direction, the relative distance being indicated the parallax image 10, is referred to as a "distance".

The parallax voting unit (parallax voting unit 300) votes a parallax according to the depth distance of an object, the depth distance being specified from external environment information, in a UD voting space having one axis representing the depth distance of the external environment. The parallax voting unit 300 thus determines the distance from the vehicle to the object, based on a parallax inputted from the parallax generation unit 200, and votes the parallax in the UD voting space according to the determined distance. The UD voting space is a space having the horizontal axis defining a horizontal position U in terms of image coordinates and the vertical axis defining a parallax value D. The parallax value D represents a depth distance. For example, when external environment information indicates that a different vehicle is present 20 m ahead of the vehicle in its direction of traveling, an image indicating the presence of the different vehicle is displayed in a parallax image. The details of the UD voting space will be described later with reference to FIGS. 3 to 6.

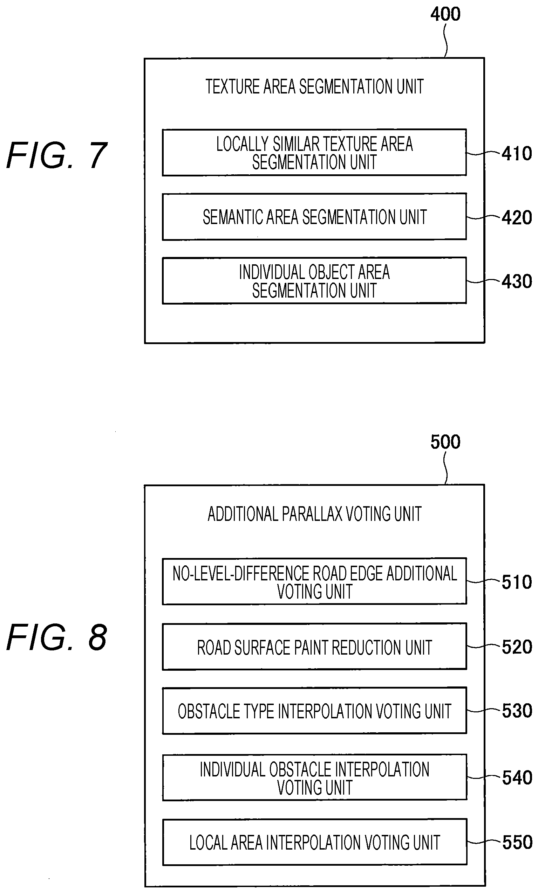

The texture area segmentation unit (texture area segmentation unit 400) segments external environment information into a plurality of texture areas for individual textures specified from the external environment information acquired from the external environment information acquisition unit (external environment information acquisition unit 100). For example, the texture area segmentation unit 400 segments external environment information for individual objects of the same texture, such as roadways, sidewalks, lanes, and vehicles, among various objects indicated in the external environment information. Texture refers to such properties of an object as a surface shape, a pattern, and a color. According to this definition, vehicles or lanes that are the same in object type but are different in texture may be segmented into different texture areas. An example of an internal configuration of the texture area segmentation unit 400 is shown in FIG. 7, which will be described later.

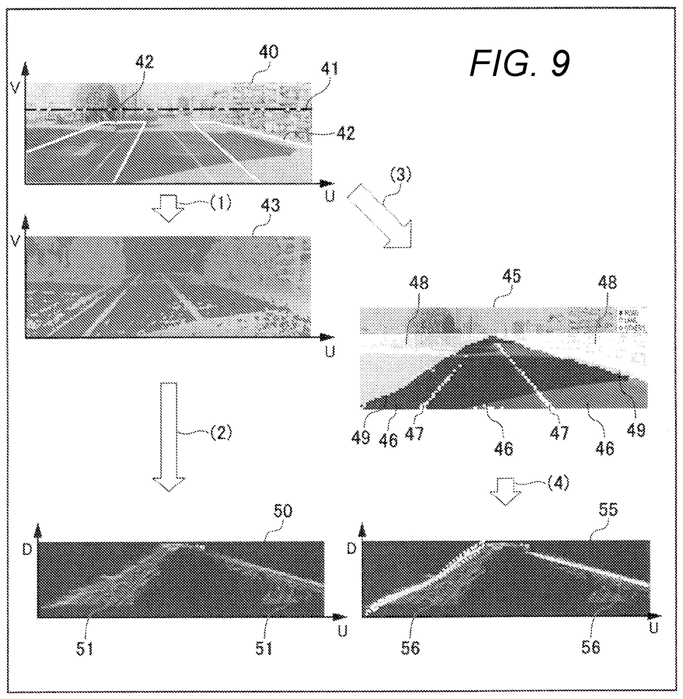

The additional parallax voting unit (additional parallax voting unit 500) votes an additional parallax in the UD voting space, where a parallax has been voted by the parallax voting unit 300, based on segmented texture areas created by the texture area segmentation unit 400. The additional parallax voting unit (additional parallax voting unit 500) votes a parallax that is weighted based on a texture area. Because of this, in the UD voting space, a part corresponding to a boundary between segmented texture areas is emphasized (see FIG. 9, which will be described later). For example, the additional parallax voting unit 500 votes an additional parallax weighted, with respect to an object with a small height, such as a road edge with no level difference. This allows the object detection unit 600 to detect the road edge with no level difference.

In addition, the additional parallax voting unit 500 interpolates a parallax with respect to an area where a parallax image is missing a parallax to make detecting the parallax image as one object difficult. This allows the object detection unit 600 to detect an object missing a parallax. An example of an internal configuration of the additional parallax voting unit 500 is shown in FIG. 8, which will be described later.

The object detection unit (object detection unit 600) detects an object, based on the number of parallax votes given in the UD voting space, thereby recognizing the external environment. The object detection unit 600 is thus able to determine whether the detected object is an obstacle that the host vehicle should avoid. An original image as external environment information carries images of various objects, among which an object against which the host vehicle needs to make some control actions, such as an evasive or stopping action, is referred to as an "obstacle ". The object detection unit 600 certainly detects even an obstacle with a low height, which is advantageous in comparison with a conventional external environment recognition device. Information on an obstacle detected by the object detection unit 600 (the size, distance, type, etc., of the obstacle) is sent to an autonomous driving control unit (ECU), which is not illustrated, and is used for autonomous driving.

The alarm control unit 700 controls various alarms, based on information on an obstacle detected by the object detection unit 600. The alarm control unit 700, for example, outputs an instruction to turn a steering wheel in the direction of avoiding an obstacle or apply a brake, to the autonomous driving control unit (not illustrated), causes an instrument panel in the vehicle to display an alarm message, or causes a speaker in the vehicle to emit an alarm sound.

### <Example of Hardware Configuration of Computer>

A hardware configuration of a computer 800 making up the external environment recognition device 1 will then be described.

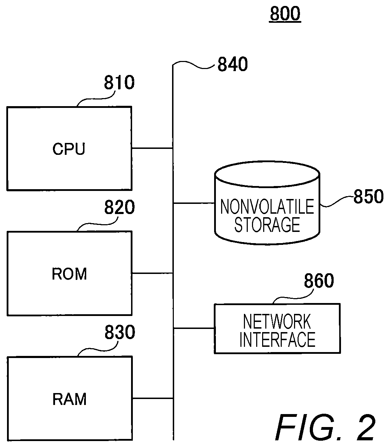

FIG. 2 is a block diagram showing an example of a hardware configuration of the computer 800. The computer 800 is an example of a piece of hardware serving as a computer capable of operating as the external environment recognition device 1 according to this embodiment. The external environment recognition device 1, i.e., the computer 800 (computer) of this embodiment executes a program, thereby implementing an image recognition method, which is executed by the functional blocks shown in FIG. 1 that work together to execute the method.

The computer 800 includes a central processing unit (CPU) 810, a read only memory (ROM) 820, and a random access memory (RAM) 830, which are each connected to a bus 840. The computer 800 further includes a nonvolatile storage 850 and a network interface 860.

The CPU 810 reads the programming code of software for implementing functions of this embodiment, from the ROM 820, loads the programming code onto the RAM 830, and executes the programming code. Variables, parameters, etc., produced during arithmetic processing by the CPU 810 are temporarily written to the RAM 830, from which the CPU 810 reads out these variables, parameters, etc. A micro processing unit (MPU) may be used in place of the CPU 810 or the CPU 810 and a graphics processing unit (GPU) may be used together. The CPU 810 implements the functions of the external environment information acquisition unit 100, the parallax generation unit 200, the parallax voting unit 300, the texture area segmentation unit 400, the additional parallax voting unit 500, the object detection unit 600, and the alarm control unit 700 that are shown in FIG. 1.

As the nonvolatile storage 850, for example, a hard disk drive (HDD), a solid state drive (SSD), a flexible disk, an optical disk, a magneto-optical disk, a CD-ROM, a CD-R, a magnetic tape, or a nonvolatile memory is used. As well as an operating system (OS) and various parameters, programs by which the computer 800 functions are recorded in the nonvolatile storage 850. The ROM 820 and the nonvolatile storage 850 store therein programs, data, and the like the CPU 810 needs for its operation, and are used as an example of a computer-readable non-transitory storage medium storing programs executed by the computer 800. External environment information acquired by the external environment information acquisition unit 100, a parallax generated by the parallax generation unit 200, the number of parallax votes given in the UD voting space, information on an object detected by the object detection unit 600, and the like are stored in the nonvolatile storage 850, and are collected, when necessary, by a software program developer via a network.

For example, a network interface card (NIC) or the like is used as the network interface 860, and various data can be transmitted and received between devices via a local area network (LAN), a dedicated line, or the like that is connected to a terminal of the NIC. The external environment recognition device 1 can transmit and receive various data to and from an external cloud server or the like through the network interface 860.

### < Description of Parallax Voting >

Before description of an example of internal configurations of the texture area segmentation unit 400 and the additional parallax voting unit 500 shown in FIG. 1, a parallax voting process and the UD voting space will be described with reference to FIGS. 3 to 6. A process of determining a distance frequency for each pixel of the parallax image 10 including distance information determined from a parallax of an object will be described.

FIG. 3 depicts an example of a distance frequency distribution in an area (road surface) where no three-dimensional object is present.

The parallax image 10 on the left side in FIG. 3 shows three-dimensional objects determined from external environment information. A range of the parallax image 10 corresponds to an imaging range of a camera 110 (e.g., a stereo camera) shown on the right side of FIG. 3. The horizontal axis of the parallax image 10 indicates the lateral position of the original image on the camera screen, and the vertical axis of the parallax image 10 indicates a distance to (parallax value of) an object appearing on the original image, the distance being determined from a parallax. Because of this, on the parallax image 10, an object with a short distance to the camera appears on this side (lower side) as an object with a long distance to the camera appears on the far side (upper side). Because the parallax image 10 includes distance information, it is referred to also as a distance image.

The road surface of a roadway appears in a road surface area 11 on the right side in the parallax image 10. The road surface, which extends uniformly from an area close to the vehicle to an area distant to the vehicle, is an object with less unevenness. In FIG. 3, description will be made with focus placed on a range of a column 12 in the road surface area 11 on the right side in the parallax image 10. The column 12 is made up of 11 blocks whose distances to the camera 110 shown on the right side of FIG. 3 are calculated. 1 block represents a unit number of vote "1".

On the right side in FIG. 3, a state in which the camera 110 takes an image of the road surface area 11 in the range of the column 12 is depicted. In an imaging range 13 of the camera 110 shown in FIG. 3, only the image of the road surface is captured. A histogram 14 on the upper right side in FIG. 3 shows a voting result of parallax voting made with respect to the distance from the position of the camera 110 to an object, the voting result being indicated within the range of the column 12. The parallax voting unit 300 votes the number of blocks with respect to the distance of a block which is, in the road surface area 11, at the same vertical position as any one of blocks arranged in the vertical direction in the column 12. In this manner, a histogram on any given vertical position is created. The number of blocks the parallax voting unit 300 votes is a value related to the distance, and the distance is calculated from a parallax. For this reason, in the following description, voting a block of which the distance is equal to a certain distance is referred to also as "parallax voting " or" voting a parallax ".

The histogram 14 shows a threshold representing the number of votes that should be interpreted as an obstacle. The threshold is at the position of 5 blocks. Because the road surface has less unevenness as described above, the number of blocks voted with respect to the road surface is around 1 or 2, regardless of the distance from the road surface to the camera 110. In this case, therefore, the number of blocks is smaller than the threshold "5". Thus, the road surface is not recognized as an obstacle.

FIG. 4 depicts an example of a distance frequency distribution in an area where a three-dimensional object (preceding vehicle) is present.

A parallax image 10 shown on the left side in FIG. 4 is identical with the parallax image 10 shown in FIG. 3. In a vehicle area 16 on the left side in the parallax image 10, a preceding vehicle 18 traveling 10 m ahead of the host vehicle is shown (see the lower right side in FIG. 4). In FIG. 4, description is made with focus placed on a range of a column 17 in the vehicle area 16 on the left side in the parallax image 10. The column 17 is made up of 11 blocks whose distances to the camera 110 shown on the right side in FIG. 4 are calculated.

On the right side in FIG. 4, a state in which the camera 110 takes an image of the vehicle area 16 in the range of the column 17 is depicted. In the imaging range 13 of the camera 110 shown in FIG. 4, an image of the back of the preceding vehicle 18 is captured at a position of 10 m distant from the camera. A histogram 19 on the upper right side in FIG. 4 shows a voting result of parallax voting made with respect to the distance from the position of the camera 110 to an object, the voting result being indicated within the range of the column 17. The parallax voting unit 300 votes the number of blocks with respect to the distance of a block which is, in the vehicle area 16, at the same vertical position as any one of blocks arranged in the vertical direction in the column 17.

As shown on the left side in FIG. 4, blocks are stacked high at the position of about 10 m distant at which the image of the back of the preceding vehicle 18 is captured. As a result, the number of blocks "6", which is greater than the threshold "5"**,** is voted at a position of 10 m, i.e., the position of 10 m distant, in the histogram 19. It is thus found, based on the histogram 19, that the back of the preceding vehicle 18 is 10 m ahead of the host vehicle.

In this manner, the number of blocks shown in the histograms 14 and 19 differs between an area where a three-dimensional object is not present and an area where a three-dimensional object is present. In the area where the three-dimensional object is present, the number of blocks increases according to the height of the three-dimensional object. At a point of distance at which the number of blocks voted is larger than the threshold, an object the host vehicle should avoid is present as an obstacle.

A large object like the preceding vehicle 18 shown in FIG. 4 is easily detected as a three-dimensional object. In the case of a boundary with little height, such as a road edge with no level difference, however, the number of blocks stacked in the histogram is so small as to be smaller than the threshold, so that recognizing such a boundary is difficult. It is therefore considered to be necessary for autonomous driving that an object difficult to recognize only by the process of voting a block equal in distance to the camera 110 with a block of the column (e.g., a road edge with no level difference, a road edge with a low level difference, a pylon lying on a roadway, and the like.) can be detected.

It should be noted that a result of parallax voting made with respect to each distance of an object, the parallax voting being depicted in FIGS. 3 and 4, that is, the number of parallax votes given according to the distance of the object is reflected in the UD voting space, which will be described later. The UD voting space is a space in which, as indicated by the columns 12 and 17 of the parallax image, the number of parallax votes given with respect to the entire parallax image is reflected by shifting the columns, and the horizontal axis represents the lateral position of the original image on the camera screen as the vertical axis represents a parallax value of (distance to) an object.

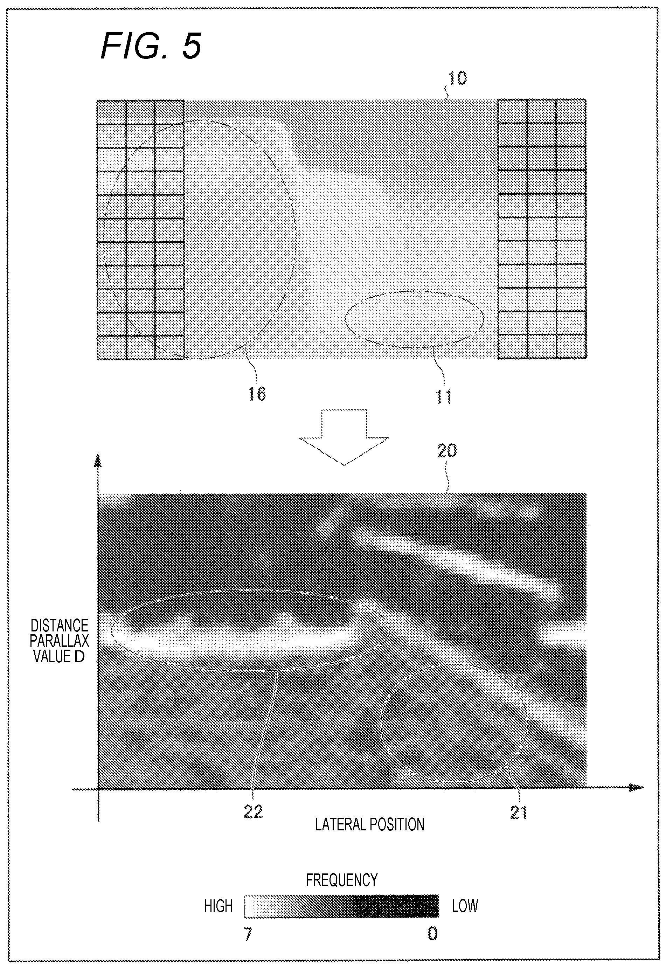

FIG. 5 depicts an example of the parallax image 10 and the UD voting space 20.

On the upper side in FIG. 5, the parallax image 10 of FIGS. 3 and 4 is shown. The parallax image 10 shows the road surface area 11 where the road surface is present and the vehicle area 16 where the preceding vehicle is present.

On the lower side in FIG. 5, the UD voting space 20 showing the features of the three-dimensional object is shown. The horizontal axis of the UD voting space 20 represents a horizontal position U associated with the horizontal position of parallax image 10, and the vertical axis of the same represents the distance to (parallax value D of) the three-dimensional object. The UD voting space 20 is a diagram in which the number of blocks (frequency) voted for each block's distance with respect to the entire parallax image 10 by the method indicated in FGS. 3 and 4 is visualized. The frequency, i.e., the number of blocks shown as a legend under the UD voting space 20 is obtained as a value ranging from "0" to "7" that corresponds to a frequency shown in the histograms 14 and 19 of FIGS. 3 and 4. A dark color part of the UD voting space 20 indicates a part with a low frequency, and a light color part of the same indicates a part with a high frequency. For example, in the UD voting space 20, a part with a frequency ranging from "0" to "1" is displayed as a dark color (black) part, while a part raging from "6" to "7" is displayed as a light color (white) part.

In this process of coloring in accordance with the frequency of a block voted with respect to a certain vertical position (distance) in the parallax image 10, the vertical position in the parallax image 10 is changed. As a result, the UD voting space 20 is generated. In the UD voting space 20 shown in FIG. 5, an area 21 on the lower right side indicates the presence of a road edge with no level difference, and an area 22 on the upper left side indicates the presence of the preceding vehicle 18. In this manner, by using the UD voting space 20 colored in accordance with the frequencies of blocks, an object with a sufficient height is easily detected but an object with a small height is still difficult to detect. For example, the road edge with no level difference shown in the area 21 of the UD voting space 20 has the boundary that makes the sidewalk slightly higher than the roadway, and therefore the frequency of blocks for the road edge is higher than the frequency of blocks for the road surface. However, because the height of the boundary is smaller than the height of the back of the preceding vehicle 18, the frequency of blocks for the road edge for each distance is low as a whole.

Parallax voting the external environment recognition device 1 of this embodiment performs to detect a three-dimensional object in an improved manner will be described.

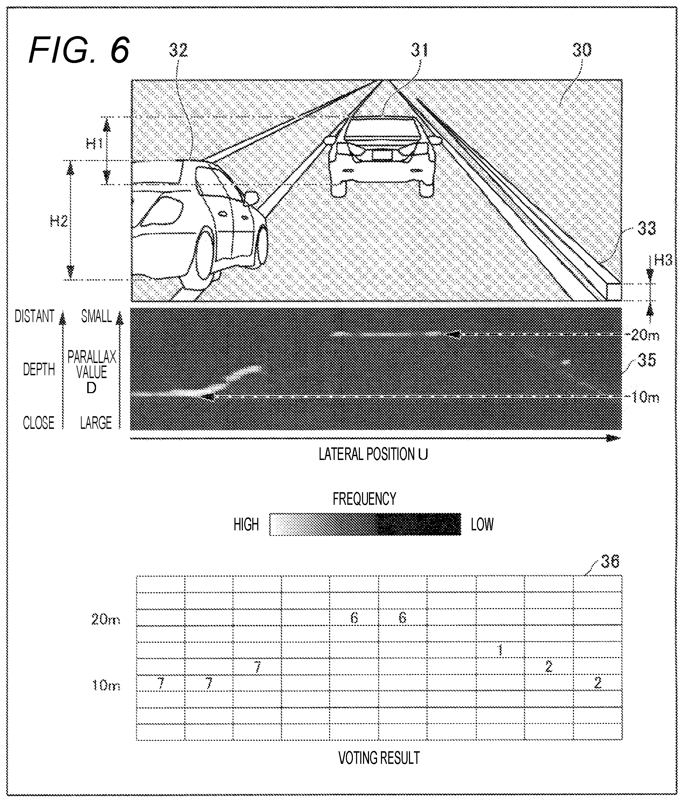

FIG. 6 depicts an example of an original image 30 captured by a stereo camera and a UD voting space 35. The original image 30 shown in FIG. 6 is an image captured by a left stereo camera.

On an upper part of FIG. 6, the original image 30 depicting two preceding vehicles 31 and 32 is shown. The preceding vehicle 31 is traveling on the same lane where the host vehicle is traveling, and the preceding vehicle 32 is on its way to come out of an adjacent lane and enter the lane where the host vehicle is traveling. A median strip 33 is present on the right side to the lane where the host vehicle is traveling.

Under the original image 30 of FIG. 6, an example of the UD voting space 35 is shown, the UD voting space 35 being generated based on the original image 30. The UD voting space 35 is generated based on a parallax generated from two original images 30. The horizontal axis of the UD voting space 35 is defined as a horizontal position U associated with horizontal coordinates in the original image 30, and the vertical axis of the same is defined as a parallax value D representing a distance to an object detected from the original image 30. An object in the UD voting space 35 has its position specified by UD coordinates. In this manner, the UD voting space has one axis representing a depth distance in the external environment, and another axis representing an angle at which the external environment information acquisition unit (external environment information acquisition unit 100) can acquire external environment information or a lateral position of an image in a case of external environment information indicating the image. The angle at which external environment information can be acquired is equivalent to, for example, an image-capturing angle of the stereo camera in the horizontal direction or a measurement angle of the LiDAR in the horizontal direction, the measurement angle allowing the LiDAR to make measurement.

A large parallax value D means that a distance in the depth direction (depth distance) to an object appearing in the original image 30 is small, that is, the object is close to the stereo camera (host vehicle) in the depth direction. Conversely, a small parallax value D means that a distance in the depth direction (depth distance) to an object appearing in the original image 30 is large, that is, the object is distant from the stereo camera (host vehicle) in the depth direction. As indicated in FIG. 5, in the UD voting space 35, a result of voting made with respect to a parallax point group generated according to distances to objects is indicated.

In the UD voting space 35, a parallax is voted on the assumption that the whole of the back of the preceding vehicle 31 is at the same distance (e.g., 20 m) to the host vehicle. As a result, parallaxes voted with respect to the preceding vehicle 31 are accumulated at a position of the parallax value D=20 m, at which a white horizontal line is displayed in line with the lateral width of the preceding vehicle 31. Meanwhile, the preceding vehicle 32 shows its diagonal view in the original image 30. For this reason, the distance between the back and the right side of the preceding vehicle 32 is detected. As a result, in the UD voting space 35, parallaxes voted with respect to the back of the preceding vehicle 32 are accumulated at a position of the parallax value D=10 m. In addition, parallaxes voted with respect to the right side of the preceding vehicle 32 are also accumulated at a position further distanced in the depth direction by the length of the preceding vehicle 32. The back and the right side of the preceding vehicle 32 are expressed as a horizontal white line and a diagonal white line, respectively, in the UD voting space 35. As shown in FIG. 6, because the height H2 of the preceding vehicle 32 close to the host vehicle is larger in the vertical direction than the height H1 of the preceding vehicle 31 more distant from the host vehicle, the white line representing the preceding vehicle 32 is thinner (whiter) than the white line representing the preceding vehicle 31.

On a lower part of FIG. 6, an example of a voting result is shown. This voting result is a simple diagram created in association with the UD voting space 35. As shown in the voting result, the number of parallax votes given with respect to the preceding vehicle 32 is "7" at the position of 10 m, and the number of parallax votes given with respect to the preceding vehicle 31 is "6" at the position of 20 m. Because, in the original image 30, the height H2 of the preceding vehicle 32 is higher than the height H1 of the preceding vehicle 31, the number of votes with respect to the preceding vehicle 32 is greater.

Because the height H3 of the median strip 33 shown on the right side in the original image 30 is small, the number of parallax votes given at the position corresponding to the median strip 33 is "1" or "2" in the UD voting space 35. It should be noted that the number of votes in the UD voting space 35 is recorded in a different cell as well, but description of such a cell is skipped because it leads to complicated drawings. As indicated in FIGS. 3 and 4, the threshold for recognizing an object as an obstacle is "5". The median strip 33 is, therefore, not recognized as an obstacle, in which case a method of increasing the number of votes given with respect to the median strip 33 is required.

### <Example of Internal Configuration of Texture Area Segmentation Unit >

An example of an internal configuration of the texture area segmentation unit 400 will then be described.

FIG. 7 is a block diagram showing an example of the internal configuration of the texture area segmentation unit 400.

The texture area segmentation unit (texture area segmentation unit 400) includes a locally similar texture area segmentation unit (locally similar texture area segmentation unit 410) that segments external environment information into texture areas for individual textures locally similar to each other, a semantic area segmentation unit (semantic area segmentation unit 420) that segments external environment information into semantic areas for individual object types, and an individual object area segmentation unit (individual object area segmentation unit 430) that segments external environment information into individual object areas for individual objects.

The locally similar texture area segmentation unit 410 segments an area in the captured original image for individual textures locally similar to each other. It is required that similar textures be at least part of the same object. For example, in an assumed case where one preceding vehicle is present and similar textures (e.g., the same color) exists in that preceding vehicle, an area in the preceding vehicle is segmented for individual similar textures.

The semantic area segmentation unit 420 segments various objects appearing in a captured original image, as individual semantic areas for objects, such as a vehicle area and a road surface area. An area segmented as each semantic area for an object in such a manner is referred to as a "semantic area". As a method of semantic area segmentation, for example, a segmentation method called semantic segmentation is used. Semantic segmentation is a method of attaching a specific label to every pixel in an image and segmenting an area in the image for individual object types. Segmented areas resulting from semantic segmentation are shown as, for example, a semantic area segmentation image 45 of FIG. 9, which will be described later. According to semantic segmentation, when a plurality of vehicles are superimposed in the original image, the whole of those vehicles are segmented as a semantic area, from the original image. In other words, in the semantic area, the plurality of vehicles overlapping in the original image are not segmented into each single vehicle. A specific example of a process by the semantic area segmentation unit 420 will be described as a semantic area segmentation process, which will be described later.

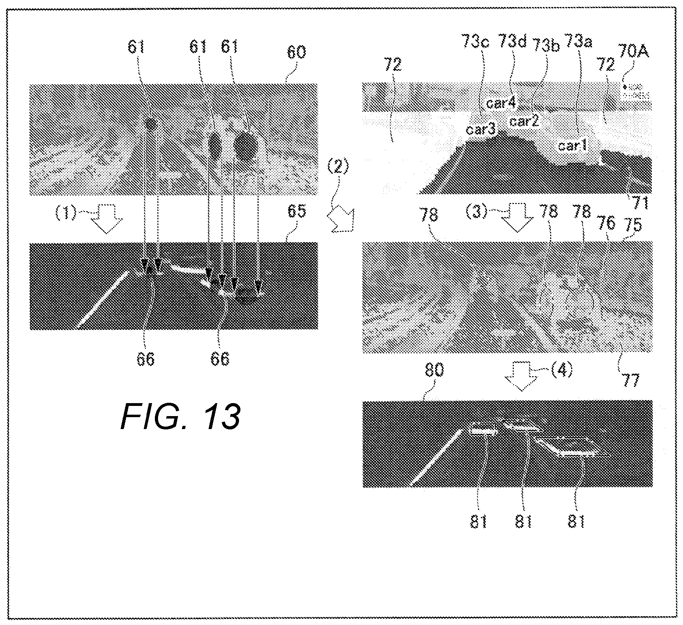

The individual object area segmentation unit 430 segments areas for individual objects, such as a vehicle and a road surface, from a captured original image. As a method of individual object area segmentation, for example, a segmentation method called instance segmentation is used. Instance segmentation is a method of separately detecting a group of objects overlapping in an image and segmenting an area in the image for individual groups of objects detected. Segmented areas resulting from instance segmentation are shown in, for example, an individual object area segmentation image 70A of FIG. 13, which will be described later. An area including an object individually segmented from the image in such a manner is referred to as an "individual object area". A specific example of a process by the individual object area segmentation unit 430 will be described as an individual object area segmentation process, which will be described later.

In the following description, when the texture area, the semantic area, and the individual object area are not distinguished from each other, they may be collectively referred to as "segmented area".

### <Example of Internal Configuration of Additional Parallax Voting Unit>

An example of an internal configuration of the additional parallax voting unit 500 will then be described.

FIG. 8 is a block diagram showing an example of the internal configuration of the additional parallax voting unit 500.

The additional parallax voting unit 500 includes a no-level-difference road edge additional voting unit 510, a road surface paint reduction unit 520, an obstacle type interpolation voting unit 530, an individual obstacle interpolation voting unit 540, and a local area interpolation voting unit 550.

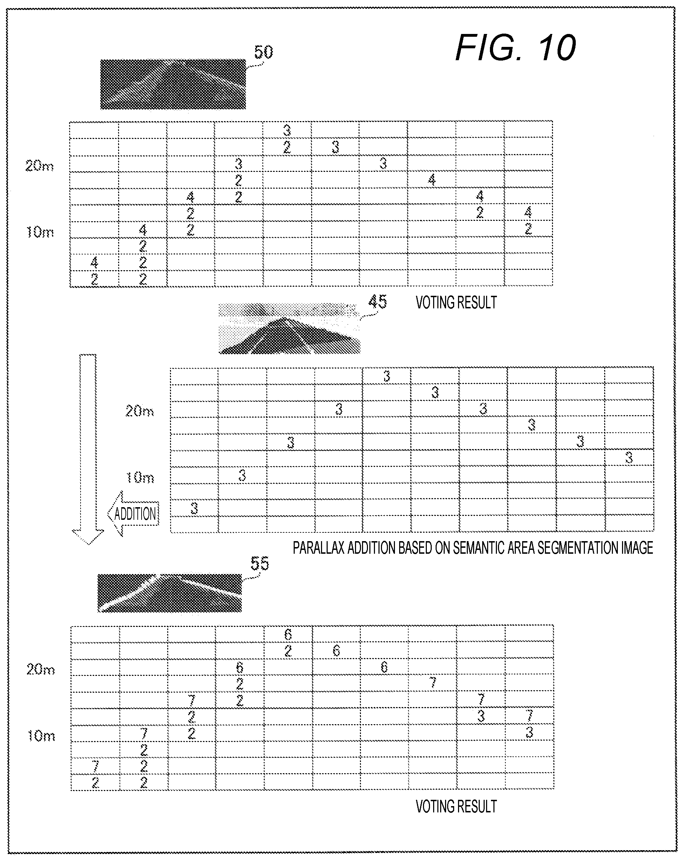

In the UD voting space, the no-level-difference road edge additional voting unit 510 performs additional parallax voting with respect to a road edge with no level difference or a low level difference (which is referred to as a "no-level-difference road edge"). The number of parallax votes given with respect to the no-level-difference road edge is so small that the number of parallax votes is lower than the threshold. The no-level-difference road edge additional voting unit 510 adds a parallax to the no-level-difference road edge, thus increasing the number of parallax votes given with respect to the no-level-difference road edge. This process allows the object detection unit 600 to detect the no-level-difference road edge as an obstacle. Details of the process by the no-level-difference road edge additional voting unit 510 will be described with reference to FIGS. 9 and 10, which will be described later.

The additional parallax voting unit (additional parallax voting unit 500) includes the reduction unit (road surface paint reduction unit 520) that reduces the number of parallax votes given with respect to a road sign. For example, when a road sign painted on the road surface (which is referred to as "road surface paint"), such as a zebra zone, a crosswalk, or a stop sign, the road sign being an example of a specific texture area, is a road surface paint extending in the depth direction, a parallax may develop at a boundary between the road surface and a white line despite the fact that the road surface paint has no height as an object. In this case, the road surface paint is likely to be misinterpreted as the presence of an obstacle. In another case, if a white line is painted in such a way as to cross a lane, no parallax develops and therefore a distance to the white line becomes unclear. However, the process by the semantic area segmentation unit 420 according to this embodiment makes it clear that such a white line is a painted part on the road surface. The road surface paint reduction unit 520 performs weighting of reducing the number of parallax votes given by the parallax voting unit 300 with respect to the road surface paint. When the texture area segmentation unit 400 segments an area to which a label of the road surface paint is attached, the road surface paint reduction unit 520 adjusts the number of parallax votes given by the parallax voting unit 300, with respect to the area to which the label of the road surface paint is attached.

For example, the road surface paint reduction unit 520 reduces a voting value for the road surface paint, the voting value being the number of parallax votes given by the parallax voting unit 300 with respect to the road surface paint, to the half. It is assumed that the parallax voting unit 300 usually gives a parallax vote in a unit of "1" in the UD voting space. The road surface paint reduction unit 520 performs weighting of reducing the number of parallax votes given already, for example, in a unit of "0.5". The road surface paint reduction unit 520 may cancel the number of parallax votes given by the parallax voting unit 300 with respect to the segmented area to which the label of the road surface paint is attached, by weighting of adding "-1" vote to the number of parallax votes given already. In this manner, to prevent the object detection unit 600 from wrongly detecting the segmented area to which the label of the road surface paint is attached to be an obstacle, the road surface paint reduction unit 520 makes adjustment to avoid concentration of votes with respect to the segmented area. As a result, when the additional parallax voting unit 500 makes additional voting, the number of votes given with respect to the area to which the label of the road surface paint is attached is adjusted.

The road surface paint reduction unit 520 may adjust the number of votes (height) given with respect to a specific part in the UD voting space after additional voting is over. A case is assumed, for example, where it is found from a parallax value that the road surface paint is at a position of U=100 and D=10 in the UD voting space. In this case, the road surface paint reduction unit 520 reduces the number of votes (height) given with respect to a voting space near the area of the road surface paint, to the half. In addition, to ensure that a voting value representing the number of parallax votes given with respect to the road surface paint is not significantly different from a voting value for a peripheral area of the painted part, a smoothing filter may be applied to the vicinity of the area of the road surface paint to reduce the number of votes (height) given with respect to the vicinity of the area. In addition, the road surface paint reduction unit 520 may carry out the process of reducing the number of votes also on a road sign projected on a road surface not painted. In this manner, assuming that the road surface paint constitutes a flat surface creates an effect that the voting value for the painted part is distributed to the voting value for the peripheral area of the painted part, which reduces a possibility of wrongly determining the painted part to be an obstacle. Thus, the object detection unit 600 does not wrongly detect the road surface paint to be an obstacle.

The obstacle type interpolation voting unit 530 makes voting for interpolating an obstacle type. For example, when a plurality of objects appear in the original image, if the objects are of the same type, the obstacle type interpolation voting unit 530 interpolates an obstacle type with respect to the entire group of the objects, regardless of the positions of the objects. Objects are classified into different types of objects, such as vehicles, pedestrians, roads, white lines, and road surface paints. It is required that such objects as a vehicle and a pedestrian be detected certainly as obstacles. These objects are thus interpolated with parallaxes for individual object types to prevent a failure in detection of the objects. The obstacle type interpolation voting unit 530 determines whether voting made is voting for a plurality of blocks with the same distance to the camera that make up a column in the image, as shown in FIGS. 3 and 4. If it is voting for the blocks with the same distance to the camera that make up the column, an object detected has a certain height at that distance. If it is not voting for the blocks with the same distance to the camera that make up the column, the object detected has a low height. Because of such a process, the object detection unit 600 does not wrongly detect the road surface paint, such as a white line, to be an obstacle, and is able to detect a group of objects with a height, such as pedestrians and vehicles, to be obstacles.

The individual obstacle interpolation voting unit 540 makes voting for interpolating individual types of obstacles. For example, when a plurality of objects appear in the captured original image, the individual obstacle interpolation voting unit 540 separately interpolates individual objects with parallaxes. For example, different pieces of identification information (identification IDs) are assigned respectively to three-dimensional objects, such as vehicles and pedestrians, detected by the individual object area segmentation unit 430. When a plurality of pedestrians crossing a crosswalk are detected, the individual obstacle interpolation voting unit 540 can interpolate a parallax on the assumption that these pedestrians are collectively present at the same distance. In the case of preceding vehicles, if the preceding vehicles are present in the same object, a parallax can be interpolated on the assumption that preceding vehicles are present at the same distance. Because of such a process, the object detection unit 600 can separately detect a high object as an obstacle or collectively detect a plurality of objects as obstacles.

The local area interpolation voting unit 550 makes voting for interpolating a local similar texture area segmented by the locally similar texture area segmentation unit 410. The local similar texture area is referred to also as a "local area". In the original image, the same texture in the same object is segmented as a local area. The local area interpolation voting unit 550 votes a parallax on the assumption that all objects, distances, or planes are the same if they are present in the same local area similar texture. If parallaxes are widely dispersed, on the other hand, the local area interpolation voting unit 550 may not interpolate a parallax even if objects, distances, or planes are present in the same local area similar texture area. For example, if parallaxes are dispersed at positions of 5 m and 20 m, it can be considered to be a case where textures of different objects happen to be the same, in which case a parallax is not interpolated. Because of such a process, the object detection unit 600 can detect objects of the same texture that are dispersed in the same object, as a single object.

### <Description of Semantic Area Segmentation>

Semantic area segmentation will then be described with reference to FIGS. 9 and 10.

FIG. 9 depicts transition of individual images for description of semantic area segmentation.

FIG. 10 depicts an example of voting results on individual images.

On the upper side in FIG. 9, one of two images captured by the stereo cameras (e.g., a right image captured by the right camera) is shown as an original image 40. The original image 40 is expressed by a UV coordinates system having the horizontal axis representing a horizontal position U and the vertical axis representing a vertical position V. A horizontal line 41 traversing inside the original image 40 is provided to distinguish an image processing target, and is, actually, not shown in the original image 40. Because an area below the horizontal line 41 includes information necessary for traveling of the vehicle, obstacle detection is carried out in the area below the horizontal line 41. An area above the horizontal line 41 include a distant building, a road, an upper part of a tree, or the like, that is, only the objects with which the vehicle by no means comes in contact are shown in the area. Obstacle detection in this area is, therefore, unnecessary.

Processing areas 42 each framed with a white line are shown in the original image 40. In an assumed case where the host vehicle is traveling straight on the left, the host vehicle needs to keep traveling in the same lane except when making a lane change. Thus, an area including a boundary between a sidewalk and a roadway, the boundary being on the left side of the lane in which the host vehicle is traveling, and an area including an boundary between a sidewalk and a roadway in the opposite lane are selected as the processing areas 42, and parallax voting, additional parallax voting, and the like are performed with respect to the processing areas 42. The entire area below the horizontal line 41 may be selected as the processing area 42. Details of individual processes will be described, with process numbers (1) to (4) being added to arrows shown in FIG. 9.

### (1) Process of Generating Parallax Image

The parallax generation unit 200 generates a parallax from two images captured by the stereo cameras. Parallaxes generated by the parallax generation unit 200 are shown as a parallax image 43 in FIG. 9. The parallax image 43 is expressed by the UV coordinates system as the original image 40 is. In the parallax image 43, an area with a large parallax is displayed on this side, while an area with a small parallax is displayed on the far side. Because a high object, such as a preceding vehicle, a person, or a traffic light, is not shown in the original image 40, the parallax image 43 does not include a parallax of an object that could be an obstacle to the host vehicle.

### (2) Voting Process in UD Voting Space

Based on the parallax image 43, the parallax voting unit 300 carries out a voting process for the distance of each detected object to generate the UD voting space 50. The UD voting space 50 is expressed as the UD coordinates system having the horizontal axis U and the vertical axis D (depth (parallax)). In the parallax image 43, as described above, a parallax of an object that could be an obstacle to the host vehicle is not included, and because a level difference at the boundary between the roadway and the sidewalk is small, a boundary 51 is blurred and unclear. If this parallax image 43 is used for autonomous driving control, the position of the host vehicle in the roadway may become unclear. To prevent this, the semantic area segmentation unit 420 shown in FIG. 7 performs semantic area segmentation in the original image 40.

On the upper side in FIG. 10, the numbers of parallax votes given in the UD voting space 50 are shown. In this case, attention is paid to the number of parallax votes given with respect to the boundary between the roadway and the sidewalk in the UD voting space 50, the boundary having its edge emphasized in the parallax image 43. The voting result shown on the upper side in FIG. 10 indicates that the number of parallax votes given with respect to the boundary between the roadway and the sidewalk ranges from "2" to "4", which are smaller than the threshold "5". The object detection unit 600 shown in FIG. 1 is, therefore, not able to correctly recognize the boundary.

### (3) Semantic area segmentation

The semantic area segmentation unit 420 performs semantic area segmentation for each pixel in the original image 40. When semantic area segmentation is performed, the original image 40 is turned into a semantic area segmentation image 45 which is segmented into areas for individual object semantics. The semantic area segmentation image 45 is created by segmenting the original image 40 into an area 46 indicating the road surface, an area 47 indicating white lines demarcating a traveling lane, and an area 48 including sidewalks other than the roadway (see FIG. 9). It should be noted, however, that because the processing area 42 shown in the original image 40 includes respective boundaries of the area 46 indicating the road surface and the area 48 including the sidewalk other than the roadway, detecting the boundaries of the areas 46 and 48 is required.

In the middle part of FIG. 10, parallaxes (numbers of votes) added based on the semantic area segmentation image 45 are shown. In the semantic area segmentation image 45, a boundary 49 between the roadway and the sidewalk is shown clearly. A parallax is thus added to the boundary 49. The added parallax may be a uniform value or a different value. It is necessary, however, that a parallax be added so that the number of votes given with respect to the boundary, which is unclear in the UD voting space 50, exceeds the threshold.

### (4) Voting Process in UD Voting Space, Based on Semantic Area Segmentation Image

The no-level-difference road edge additional voting unit 510 of the additional parallax voting unit 500 carries out the voting process for each of the distances of detected objects, thereby generating a UD voting space 55. At this time, the no-level-difference road edge additional voting unit 510 makes additional voting with respect to the boundary between the roadway and the sidewalk, the boundary being the no-level-difference road edge, based on the semantic area segmentation image 45 generated by the semantic area segmentation unit 420. The UD voting space 55 is expressed as the UD coordinates system. In the UD voting space 55, as a result of additional parallax voting made based on the semantic area segmentation image 45, the boundary 56 between the roadway and the sidewalk is shown more clearly (highlighted white) than in the UD voting space 50 generated from the parallax image 43 only. This boundary 56 shows a feature of a shoulder with no level difference. As a result, the host vehicle is able to travel while recognizing the roadway inside the shoulder with no level difference.

On the lower side in FIG. 10, a voting result of parallax voting in which a parallax is added to the UD voting space 50 is shown. This voting result indicates that the numbers of votes with respect to parts where parallaxes are added are each larger than the threshold value "5". Thus, the object detection unit 600 shown in FIG. 1 can correctly detect the boundary between the roadway and the sidewalk. The processes indicated in FIGS. 9 and 10 may be carried out on a texture area segmented by the locally similar texture area segmentation unit 410.

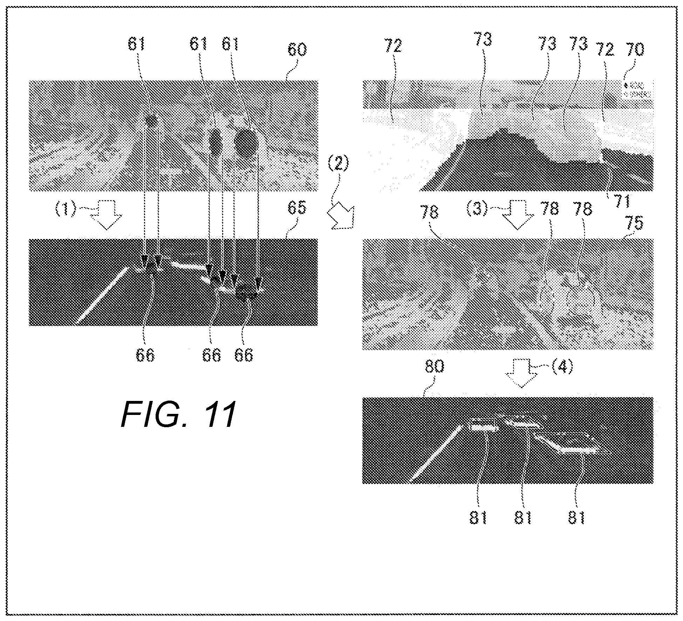

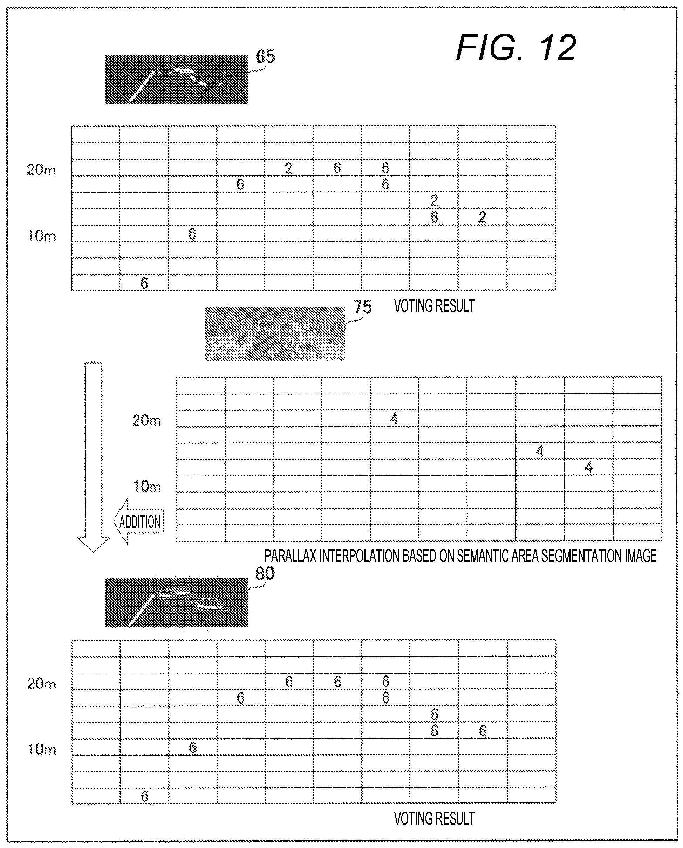

A process by which voting is made after parallax interpolation on an obstacle (which is referred to as "obstacle interpolation voting") will then be described with reference to FIGS. 11 and 12.

FIG. 11 depicts an example in which obstacle interpolation voting is made after semantic area segmentation is performed. In FIG. 11, the original image is not shown.

FIG. 12 depicts an example of respective voting results on images.

On an upper left part of FIG. 11, an example of a parallax image 60 is shown.

The parallax image 60 shows a vehicle traveling in the same direction of traveling of the host vehicle, and a plurality of vehicles traveling in the opposite lane. In this case, if the back of the vehicle traveling in the same direction of traveling of the host vehicle is black or the vehicle is traveling at night, a parallax of the vehicle traveling in the same direction of traveling of the host vehicle may be lost in an area 61. Similarly, a parallax of the vehicle traveling on the opposite lane may also be lost in the area 61. In this manner, a parallax of a part supposed to have a parallax is lost. This phenomenon is referred to as "parallax missing". Parallax missing tends to occur at a part where the texture of the original image is weak, e.g., a part where a difference in shading does not exist.

### (1) Voting Process in UD Voting Space, Based on Parallax Image 60

When the voting process is carried out in the UD voting space 65, based on the parallax image 60, the number of votes with respect to the area 61, where a parallax is missing, becomes smaller than the threshold, as indicated in an area 66. The number of votes becoming smaller than the threshold raises a possibility that the object detection unit 600 wrongly detects one vehicle to be a plurality of different objects.

On the upper side in FIG. 12, the numbers of parallax votes given in the UD voting space 65 are shown. In this case, attention is paid to the numbers of parallax votes given with respect to the boundary between the roadway and the sidewalk, the boundary having its edge emphasized in the parallax image 60, and to a face of a vehicle that faces the host vehicle, in the UD voting space 65. The voting result shown on the upper side in FIG. 12 indicates that the number of votes "6" larger than the threshold "5" is given with respect to the boundary between the roadway and the sidewalk, and therefore the object detection unit 600 shown in FIG. 1 can correctly recognize the boundary. On the other hand, because the face of the vehicle that faces the host vehicle loses a parallax in the area 61, the number of votes "2" smaller than the threshold "5" is given with respect to the face of the vehicle that faces the host vehicle. As a result, the object detection unit 600 cannot correctly recognize the size and width of the vehicle or the presence of the vehicle in the traveling direction.

To deal with this problem, a semantic area segmentation image 70 that the semantic area segmentation unit 420 shown in FIG. 7 creates by performing semantic area segmentation for each pixel in the original image is considered. On an upper right part of FIG. 11, an example of the semantic area segmentation image 70 is shown.

In the semantic area segmentation image 70, individual areas created by performing semantic area segmentation on the original image are shown. The semantic area segmentation image 70 is created by segmenting the original image into an area 71 indicating a road surface, an area 72 indicating an object other than the road surface and a vehicle, and an area 73 indicating a vehicle. According to semantic area segmentation, four vehicles shown in the original image are collectively represented by the area 73 indicating a vehicle as one object type. Object types, that is, the areas 71 to 73 are given different colors, respectively, to distinguish the areas 71 to 73 from each other. When the colored areas 71 to 73 are not distinguished by color differences, they are collectively referred to as a "colored area".

A process of acquiring the parallax image 60, a process of interpolating a parallax in the parallax image 60, and a process of voting in the UD voting space, based on the interpolated parallax image 60 will then be described separately.

### (2) Process of Acquiring Parallax Image

Acquisition of the parallax image 60 interpolated with a parallax will first be described. The obstacle type interpolation voting unit 530 (see FIG. 8) acquires the parallax image 60 from the parallax generation unit 200 (see FIG. 1), and interpolates a parallax in the area 61 where a parallax is lost in the parallax image 60.

### (3) Process of Interpolating Parallax in Parallax Image

The obstacle type interpolation voting unit 530 then interpolates a parallax with respect to each type of object detected in the parallax image 60. In this case, assuming that the obstacle detected in the parallax image 60 is a plane equal in depth in the height direction (vertical direction in the image), the obstacle type interpolation voting unit 530 interpolates a parallax missing part with a parallax near the obstacle.

It is assumed that the following methods (a) to (c) are adopted as methods by which the obstacle type interpolation voting unit 530 interpolates a parallax.

### (a) Method of Interpolating Parallax, Using Most Frequent Value in Vertical Direction in Parallax Image 60

The obstacle type interpolation voting unit 530 of the additional parallax voting unit (additional parallax voting unit 500) interpolates a parallax missing part present in a part corresponding to a texture area in the parallax image having one axis representing the depth distance, with a parallax present in the direction of the axis representing the depth distance of the parallax image. The obstacle type interpolation voting unit 530 then votes an additional parallax with respect to each texture area where a parallax missing part is interpolated. The obstacle type interpolation voting unit 530 selects a parallax to be interpolated for each attribute in a semantic area. For example, the obstacle type interpolation voting unit 530 interpolates a parallax missing part of an object whose attribute in a semantic area is a vehicle, a person, and the like, with a parallax present in the vertical direction, i.e., the direction of the depth distance axis of the parallax image. On the other hand, the obstacle type interpolation voting unit 530 interpolates a parallax missing part of an object like a flat plane whose attribute in a semantic area is a road surface or the like, with a parallax present in the horizontal direction, i.e., the direction of the other axis of the parallax image having the depth distance axis. In this manner, a parallax missing part is interpolated with a parallax corresponding to an object type. As a result, the interpolated parallax is less likely to fluctuate than a parallax present nearby.

### (b) Method of Interpolating Parallax Missing Part, Using Pixel Values of Eight Pixels Present on Upper, Lower, Left, ad Right Sides Surrounding Parallax Missing Part in Colored Area

The obstacle type interpolation voting unit 530 of the additional parallax voting unit (additional parallax voting unit 500) interpolates a parallax missing part present in a part corresponding to a texture area in the parallax image having one axis representing the depth distance, with a parallax around the parallax missing part, the parallax being present in the same object in which the parallax missing part is present. The obstacle type interpolation voting unit 530 then votes an additional parallax with respect to each texture area where a parallax missing part is interpolated. For example, the parallax missing part is interpolated, using pixel values of eight pixels on the upper, lower, left, and right sides surrounding the parallax missing part. As a result, the parallax missing part does not take a parallax value extremely different from that of the surrounding pixels.

### (c) Method of Interpolating with Parallax in Areas Above and Below Parallax Missing Part

For example, a parallax readily develops at an edge detected on a boundary between a background and an object or between a road surface and an object. However, because the edge has no thickness, the parallax is likely to break. In addition, a parallax readily develops on a part with a texture because in such a part, the same area of left and right images can be identified. However, a parallax hardly develops on a part with no texture because in such a part, the same area of left and right images is difficult to identify. The obstacle type interpolation voting unit 530 carries out a process of interpolating an area where a parallax is lost, that is, a parallax breaks or hardly develops, with a parallax of a parallax-including area near the above area. Thus, the obstacle type interpolation voting unit 530 can obtain a continuous parallax.

Each of the methods (b) and (c), however, raises a concern that a parallax missing part may be interpolated in black areas (where a parallax frequency is small) that are most frequently found in the vertical direction of the parallax image. For this reason, the obstacle type interpolation voting unit 530 does not treat black as a valid parallax but treats it as an invalid parallax. The obstacle type interpolation voting unit 530 then interpolates an invalid parallax part (black area) where a parallax is lost, with a parallax around the invalid parallax part (part different from the black area).

In addition, the obstacle type interpolation voting unit 530 may interpolate a parallax in a semantic area, the parallax being weighted in proportion to the area of the semantic area. For example, in a case where a plurality of preceding vehicles are present, weighting of a parallax with respect to a preceding vehicle which is close to the host vehicle and whose semantic area has a large area is made greater than weighting of a parallax with respect to a preceding vehicle which is distant from the host vehicle and whose semantic area has a small area. Performing weighting proportional to the area of the semantic area in this manner allows the object detection unit 600 to reliably detect a preceding vehicle close to the host vehicle.

An image the obstacle type interpolation voting unit 530 creates by interpolating parallax missing parts with parallaxes is shown in a middle part of FIG. 11, as a parallax interpolation image 75. An area 78 of the parallax interpolation image 75 is a part where a parallax is interpolated in the area 61 that is the parallax missing part shown on an upper left part of FIG. 11. In the parallax image 60, the process of parallax interpolation or the like is not carried out on a part other than the area 61.

Parallaxes (the numbers of parallax votes) that are added to the parallax interpolation image 75, based on the semantic area segmentation image 70 (see FIG. 11) are shown in the middle part of FIG 12. In the parallax interpolation image 75, a parallax is interpolated in the area 78 (see FIG. 11). The interpolated parallax may be a uniform value or a different value. It is necessary, however, that a parallax be interpolated so that the number of votes given with respect to the area 66, which is a parallax missing area in the UD voting space 65, exceeds the threshold.

### (4) Voting Process in UD Voting Space, Based on Parallax Interpolation Image

The obstacle type interpolation voting unit 530 of the additional parallax voting unit 500 carries out the voting process for each object type detected from the parallax interpolation image 75, thereby generating a UD voting space 80. The UD voting space 80 is expressed as a UD coordinates system. The obstacle type interpolation voting unit 530 interpolates an additional parallax, which is a parallax added by the obstacle type interpolation voting unit 530, in a parallax missing part, which is a part where a parallax is lost in the UD voting space 65.

On the lower side in FIG. 12, a voting result obtained by interpolating additional parallaxes in the UD voting space 80 is shown. This voting result demonstrates that the number of parallax votes of each part interpolated with an additional parallax is "6" that is larger than the threshold "5". As a result, the object detection unit 600 shown in FIG. 1 can correctly recognize the width and size of a vehicle and the presence of the vehicle in the area 81 in FIG. 11. The host vehicle is, therefore, able to travel while recognizing the roadway.

According to the conventional process of directly making parallax voting in the UD voting space, based on the parallax image 60, if a parallax of an object is missing in the area 66, which is the parallax missing part, it is high possible that the conventional object detection unit fails to detect an obstacle. However, the obstacle type interpolation voting unit 530 adds a parallax to the parallax missing part to interpolate the parallax in the UD voting space. This process, compared with the process of voting a parallax in the UD voting space, based on the parallax mage 60, makes it easy for the object detection unit 600 to detect an object as a single entity in a reliable manner. Hence the possibility of the object detection unit 600 detecting an obstacle is improved.

A process of adding a parallax to a parallax missing part in an individual object area will then be described.

FIG. 13 depicts an example in which obstacle interpolation voting is made after individual object area segmentation is performed. In FIG. 13, the original image is not shown. Because images in FIG. 11 and images in FIG. 13 are substantially the same, description of detailed processes is partially omitted.

### (1) Voting Process in UD Voting Space, Based on Parallax Image 60

When voting process in the UD voting space 65 is carried out, based on the parallax image 60, the number of parallax votes given with respect to the parallax missing area 61 becomes smaller than the threshold, as indicated in the area 66. This raises a possibility that the object detection unit 600 wrongly detects one vehicle to be a plurality of different objects, which has been described above with reference to FIG. 9.

A process the individual object area segmentation unit 430 shown in FIG. 8 carries out to generate an individual object area segmentation image 70A from the original image by performing individual object area segmentation for each pixel will be described. On an upper right part of FIG. 13, an example of the individual object area segmentation image 70A is shown.

In the individual object area segmentation image 70A, each of individual object areas resulting from individual object area segmentation performed on the original image is shown. The individual object area segmentation image 70A is created by segmenting the original image into individual object areas of an area 71 indicating a road surface, an area 72 indicating the road surface and an object other than a vehicle, and areas 73a to 73d indicating vehicles. By individual object area segmentation, four vehicles shown in the original image are expressed as individual areas 73a to 73d, respectively. The individual object area segmentation unit 430 labels the individual areas 73a to 73d "car 1 " to" car 4 ", respectively.

### (2) Process of Interpolating Parallax in Parallax Image

First, the individual obstacle interpolation voting unit 540 shown in FIG. 8 separately interpolates a parallax in an object with a parallax missing part among objects detected in the parallax image 60. The individual obstacle interpolation voting unit 540 interpolates a parallax in the same obstacle (object) among obstacles detected in the parallax image 60. A parallax may be interpolated by a method of interpolating a parallax of an area around the area where the parallax is lost or a method of interpolating a parallax of a parallax-including area present above or below the area where the parallax is lost. In addition, if considering the position of an object is unnecessary, distances to respective parts of the same object may be regarded as the same distance. For example, although a distance from the host vehicle to the front of a vehicle traveling in the opposite lane and a distance from the host vehicle to the side of the same are different from each other, the distance to the side of the vehicle may be taken to be the same as the distance to the front of the same. Then, by the individual object area segmentation unit 430, individual distances to objects (obstacles) can be determined even if the objects (obstacles) are located far from the host vehicle. Hence a parallax can be separately interpolated in a parallax missing part of an object.

(3) The process of interpolating an additional parallax in a parallax missing part of the parallax image 60 and (4) the process of voting a parallax in the UD voting space, the parallax being added to the parallax interpolation image 75, have been described with reference to FIG. 11.

In this manner, the individual object area segmentation unit 430 recognizes individual objects appearing in the original image and segments the original image into individual object areas, thus being able to correctly recognize each object. As a result, compared with the process of directly making parallax voting in the UD voting space, based on the parallax image 60, the possibility of separately detecting each object can be improved.

Some of obstacle detection methods will be described.

According to the object detection method by semantic area segmentation described above, the texture area segmentation unit 400 performs area segmentation on a part where parallax votes concentrate to mark a voting value equal to or higher than a certain threshold in the UD voting space while connecting pixel values of eight pixels near a pixel of interest in the UD voting space, which are eight pixels located on the upper, lower, left, right, upper right, lower right, upper left, and lower left sides to the pixel of interest at their center. Area segmentation may be performed as pixel values of eight pixels near a pixel of interest in the UD voting space, which are eight pixels located on the upper, lower, left, and right sides to the pixel of interest at their center, are connected. In texture area segmentation on an object, such as a vehicle, the texture area segmentation unit 400 gives the same ID to the same part with respect to a parallax vote is given. This allows the object detection unit 600 to detect this part to be a single object. In addition, as a result of addition of a parallax to a parallax missing part, the object detection unit 600 can make an analysis of a three-dimensional vehicle shape, which analysis is still difficult when individual object area segmentation is solely applied, and can also make an analysis of the lateral position, orientation, and shape of a vehicle. Two examples of a process of preventing the object detection unit 600 from wrongly detecting an object that could be an obstacle will be described below.

### <Wrong Detection Preventing Process 1>

First, a case where the individual object area segmentation unit 430 carries out a wrong individual object area segmentation process will be described. It is assumed, for example, that the individual object area segmentation unit 430 obtains a result of wrong individual object area segmentation, which indicates the presence of an object, such as a road edge or a vehicle, that could be an obstacle on a flat road surface or the like. As described above, the individual obstacle interpolation voting unit 540 votes a parallax interpolated in the road surface in the UD voting space. In this case, in the UD voting space, parallax votes are distributed in the depth direction of the road surface and consequently a large number of parallax votes are not given with respect to an individual object area wrongly segmented as an object present on the road surface. Therefore, even if the individual object area segmentation unit 430 makes an error in individual object area segmentation, producing a wrong detection result is prevented. As a result, an object the host vehicle should avoid on the road surface is correctly detected by the object detection unit 600.

### <Wrong Detection Preventing Process 2>

A case where the semantic area segmentation unit 420 carries out a wrong semantic area segmentation process will then be described. It is assumed that a result of semantic area segmentation indicates, for example, a result of semantic segmentation of an area including not only an object, which is an obstacle in its original form, but also a road surface in the background of the object, as a large obstacle. In this case of semantic area segmentation, the original image is segmented into an area large than the obstacle in its original form. However, the additional parallax voting unit 500 shown in FIG. 8 checks a parallax voting result on the segmented area, and a parallax exactly needed is added to the obstacle. This allows the object detection unit 600 to accurately detect the width, shape, and position of the obstacle.

Both of the wrong detection preventing processes 1 and 2 are the processes of obtaining a voting result of parallax voting with parallax interpolation, which are different from the conventional process by which an area is identified from a single area segmentation result only. By the wrong detection preventing processes 1 and 2, the object detection unit 600 offers an effect of preventing wrong detection of an obstacle while accurately detecting the three-dimensional shape of an object.

### <Local Area Interpolation Process>

A local area interpolation process will then be described.

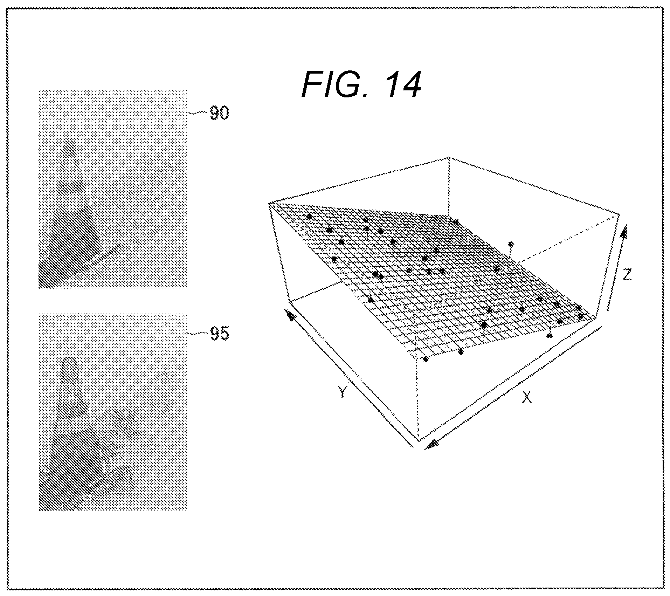

FIG. 14 is a diagram for explaining a process of recognizing a pylon. On an upper left part of FIG. 14., an example of an original image 90 showing a pylon placed on a road surface is shown. On a lower left part of FIG. 14, an example of a parallax image 95 generated from the original image 90 is shown.

On the right side in FIG. 14, a diagram of a three-dimensional point group and an estimated plane is shown. As described above, a parallax image is composed of three-dimensional point groups. An object with a curved surface, such as a conical pylon, is blended with its background, and this often makes it difficult for the conventional external environment recognition device to separately recognize the object. The locally similar texture area segmentation unit 410 shown in FIG. 7 approximates a point group on the same cell acquired by, for example, LiDAR to a plane. The shape of one object, such as a pylon shown on the lower left part of FIG. 14, is referred to as a cell.

The local area interpolation voting unit 550 shown in FIG. 8 determines whether a plane of a local area is a side face of the same three-dimensional object, based on an amount of error between a point group on the plane of the local area, which is segmented by the locally similar texture area segmentation unit 410, and a point group acquired by LiDAR. For example, in an local area recognized by the locally similar texture area segmentation unit 410 as an area where a background and an object are blended together, an amount of error between a point group on the background and a point group on the object is large because the background and the object are not the same element. On the other hand, in compared with a large amount of error between a point group on an object (e.g., a side of the pylon) and a point group on the background, the object and the background being not the same element, an amount of error between a point group on a plane of a local area and a point group on an object (e.g., a side of the pylon) is small even if the object has a curved surface because the plane and the object are the same element.

Thus, as indicated on the right side in FIG. 14, the local area interpolation voting unit 550 checks whether the point group of the local area is present in the same depth direction or on the same three-dimensional plane. When determining that one cell is one object, the local area interpolation voting unit 550 implements depth interpolation in the cell. Thereafter, by using the cell in which depth interpolation is implemented, the local area interpolation voting unit 550 is able to interpolate a parallax or noise rendered invalid and vote an additional parallax.

However, even when the point group can be approximated to the plane of the local area, if the plane given by the approximation is close to the position and inclination of the road surface, the local area interpolation voting unit 550 finds that the possibility of an object (plane) specified in the local area being an obstacle is low. In this case, the local area interpolation voting unit 550 does not use the plane given by the approximation for parallax voting. In addition, in a case where the object is blended with the background and dispersion is observed in the depth direction, this object is identified as an object significantly elongated in the depth direction from this side to the far side, despite the fact that it is a separate object different from the background. In this case, the local area interpolation voting unit 550 assumes that the locally similar texture area segmentation unit 410 fails to correctly segment the object. The locally similar texture area segmentation unit 410 then re-segments the original image. Thereafter, the local area interpolation voting unit 550 votes a parallax with respect to a local area resulting from the re-segmentation. It should be noted, however, the local area interpolation voting unit 550 may not vote a parallax with respect to the local area resulting from the re-segmentation. In this case, the object detection unit 600 detects an object, based on only the number of parallax votes given by the parallax voting unit 300 with respect to the local area resulting from the re-segmentation.

### <First Example of Process Using Three-Dimensional Point Group>

Other examples of using a three-dimensional point group will be described.

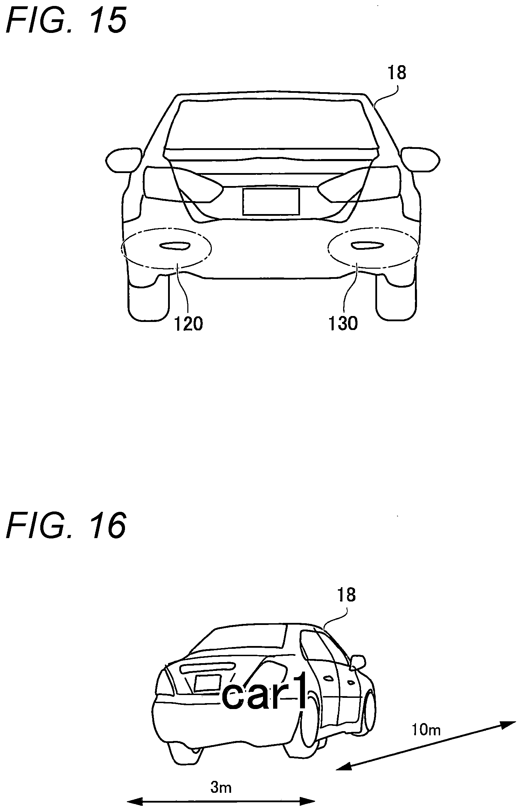

FIG. 15 is a diagram for explaining a process on a plurality of texture areas included in the same object. FIG. 15 shows an example of the back of the preceding vehicle 18.

Texture areas segmented from the original image by the locally similar texture area segmentation unit 410 (see FIG. 7) may be segmented at different places even if they are included in the same object. Similarly, even if individual object areas segmented from the original image by the individual object area segmentation unit 430 are at different places, these individual object areas may be included the same object. For example, in the preceding vehicle 18, the same texture is segmented into segmented areas 120 and 130, as texture areas or individual object areas. This brings a concern that a wrong parallax is voted under the assumption that the segmented areas 120 and 130 are objects different from each other.

Thus, when the additional parallax voting unit (additional parallax voting unit 500) can confirm from a three-dimensional point group distribution that a plurality of texture areas or individual object areas are included in the same object (preceding vehicle 18), the additional parallax voting unit (additional parallax voting unit 500) votes a valid parallax in the UD voting space, as a parallax of the same object (preceding vehicle 18). For example, the local area interpolation voting unit 550 or the individual obstacle interpolation voting unit 540 confirms a three-dimensional point group distribution with respect to the segmented areas 120 and 130, and checks whether the segmented areas 120 and 130 are included in the same preceding vehicle 18. When confirming that the segmented areas 120 and 130 are included in the same preceding vehicle 18, based on the three-dimensional point group distribution, the local area interpolation voting unit 550 or the individual obstacle interpolation voting unit 540 votes a valid parallax in the UD voting space, considering the segmented areas 120 and 130 to be one object. By this process, even if individual object areas separated from each other are present inside one object, a parallax is voted in the UD voting space, as a parallax of the individual object areas as one object.

When confirming that the segmented areas 120 and 130 are not included in the same preceding vehicle 18, the local area interpolation voting unit 550 or the individual obstacle interpolation voting unit 540 votes a valid parallax in the UD voting space, considering the segmented areas 120 and 130 to be objects different from each other.

### <Second Example of Process Using Three-Dimensional Point Group>

In the above first example of the process using the three-dimensional point group, when the segmented areas 120 and 130 are texture areas of the same texture included in the same object, the local area interpolation voting unit 550 may estimate planes or curved surfaces of the segmented areas 120 and 130. In this case, the additional parallax voting unit (additional parallax voting unit 500) estimates planes or curved surfaces of the texture areas, and when confirming that a plurality of texture areas are included in the same object (preceding vehicle 18), based on the number and distance of a group of three-dimensional points located distant from the estimated planes or curved surfaces, the additional parallax voting unit votes a valid parallax in the UD voting space, as a parallax of the same object (preceding vehicle 18). Other processes to follow are the same as the first example of the process using a three-dimensional point group, and therefore will be omitted in further description. According to the second example of the process using a three-dimensional point group, when it is confirmed that texture areas segmented at distant places are the same object, a parallax is voted with respect to the texture areas located at the distant places, which are considered to be the same object. As a result, the object detection unit 600 can correctly detect an object.

### <Third Example of Process Using Three-Dimensional Point Group>

FIG. 16 is a diagram for explaining a process of confirming an individual object area having a size within a specified range. FIG. 16 shows an example of the preceding vehicle 18 traveling diagonally.

It is assumed that the individual object area segmentation unit 430 (see FIG. 7) segments the whole of the preceding vehicle 18 as one object, from the original image into an individual object area and labels the preceding vehicle 18 "car 1". However, if the segmented individual object area includes an object of a wrong size as an individual object, a parallax of this individual object area is not adequate for voting.

For this reason, when the additional parallax voting unit (additional parallax voting unit 500) confirms that the size of the individual object area is present as the size of an individual object (vehicle), based on a three-dimensional point group distribution, the additional parallax voting unit space votes a valid parallax in the UD voting space, as a parallax of the individual object (preceding vehicle 18). For example, when the individual object is a vehicle, it is confirmed whether the size of the vehicle is within the range of the width being 3 m or less and the depth being 10 m or less. When confirming that the size of the vehicle is within the range of the width being 3 m or less and the depth being 10 m or less, the individual obstacle interpolation voting unit 540 votes a parallax in the UD voting space, considering the individual object area to be one object. By this process, a parallax is voted in the UD voting space, as a parallax of the individual object area having a proper size.

If the size of the individual object is not within the range, the individual obstacle interpolation voting unit 540 can confirm that in addition to the object, the background is also included in the individual object area. In this case, the individual obstacle interpolation voting unit 540 gives instructions on result confirmation and re-segmentation to the individual object area segmentation unit 430, and acquires a re-segmented object area. The individual obstacle interpolation voting unit 540 then interpolates a parallax in the re-segmented individual object area.

The range in which the individual obstacle interpolation voting unit 540 confirms the size of an individual object area is changed for each object type. For example, in the case of an individual object area to which a pedestrian label is attached, whether the size of the individual object area is within the range of the width being 1 m or less and the height being 2 m or less is confirmed.

### <Example of Process Carried Out by External Environment Recognition Device>

An example of a process carried out by the external environment recognition device 1 will then be described.

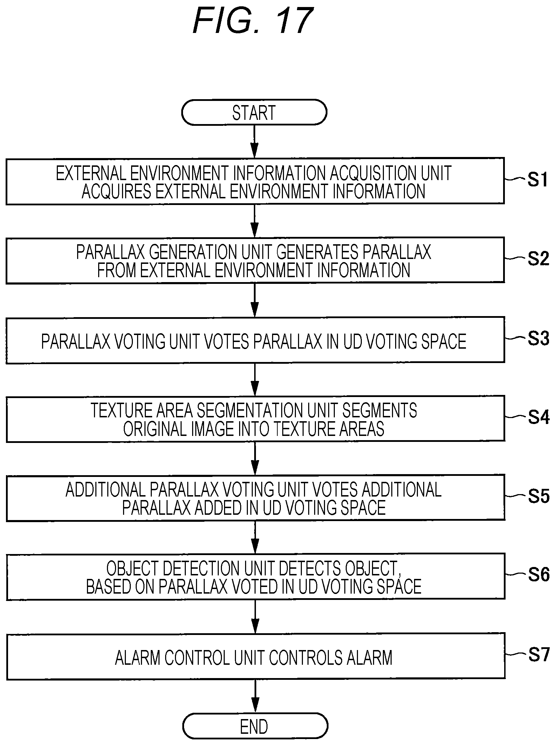

FIG. 17 is a flowchart showing an example of a process carried out by the external environment recognition device 1. In this flowchart, processes executed by individual units will be described, using the functional block diagram shown in FIG. 1.

First, the external environment information acquisition unit 100 acquires external environment information from a stereo camera or the like (S1). Subsequently, the parallax generation unit 200 generates a parallax from the external environment information (S2). Subsequently, the parallax voting unit 300 votes the parallax in a UD voting space (S3).

Subsequently, the texture area segmentation unit 400 segments an original image into texture areas, based on the external environment information (S4). This process by the texture area segmentation unit 400 may be executed in parallel with the processes of steps S2 and S3 after the external environment information is acquired at step S1.

Subsequently, the additional parallax voting unit 500 votes an additional parallax in the UD voting space in which the parallax has been voted by the parallax voting unit 300, the additional parallax being based on a texture area (S5). Subsequently, the object detection unit 600 detects an object, based on the parallax voted in the UD voting space (S6).

Then, when the object detected by the object detection unit 600 is an obstacle, the alarm control unit 700 performs alarm control (S7). This alarm control allows the host vehicle to avoid an obstacle or stop in front of the obstacle. When the object detected by the object detection unit 600 is not an obstacle, no alarm control is performed. The external environment recognition device 1 repeatedly executes these series of steps at given time intervals, with step S1 first.

According to the external environment recognition device 1 of one embodiment described above, when the UD voting space is generated from the parallax image, a parallax is voted based on a texture area segmented for each object, which makes recognition of each object clear in the UD voting space. This prevents a failure in detection or wrong detection of an object that is hardly detected by a conventional method, such as a road edge, a black vehicle, or an object with a low height left on the road, thus allowing stable, i.e., robust detection.

According to the conventional method, an object type tag is added to a result of area segmentation. This method may involve a case where because an object as a segmented area is larger than the original object or area segmentation is performed as a part of the original object is unknown, a wrong result is obtained. In such a case, there is a concern that a vehicle may be stopped suddenly or continues to travel by recognizing an obstacle to avoid as an object that does not obstruct the traveling of the vehicle. In contrast, according to the method of this embodiment, the process of additional parallax voting is additionally performed by the additional parallax voting unit 500 before the object detection unit 600 detects an object. Thus, after a parallax is voted according to a distance to the object, the shape of the object is accurately detected and analyzed by the object detection unit 600. Then, based on a result of this object detection, autonomous driving control of the vehicle is performed. The method of this embodiment, therefore, eliminates the case of the vehicle's suddenly stopping right in front of the obstacle. The method of this embodiment eliminates also the case where the vehicle continues to travel by wrongly recognizing an obstacle to avoid as an object that does not obstruct the traveling of the vehicle.

In addition, according to the conventional method, there may be an object that is not detected. According to the method of this embodiment, however, even in a case where an object is not detected by the conventional method, the additional parallax voting unit 500 interpolates a parallax and makes additional parallax voting with respect to the object. This allows the object detection unit 600 to correctly detect the object.

It should be noted that the present invention is not limited to the above-described embodiment and that, obviously, the present invention may be implemented as various other applications and modifications, providing that such applications and modifications do not depart from the substance of the present invention described in the claims.

For example, the above embodiment including its device configurations has been described specifically in detail to give an understandable description of the present invention, and is not necessarily limited to an embodiment including all constituent elements described above. Some of constituent elements of this embodiment can be deleted or added to or replaced with different constituent elements.

Control lines and information lines considered to be necessary for the description are indicated, and control lines and information lines the product needs are not necessarily indicated entirely. It is safe to consider that actually, almost all constituent elements are interconnected.

### Reference Signs List

- 1: external environment recognition device
- 100: external environment information acquisition unit
- 110: camera
- 200: parallax generation unit
- 300: parallax voting unit
- 400: texture area segmentation unit
- 410: locally similar texture area segmentation unit
- 420: semantic area segmentation
- 430: individual object area segmentation unit
- 500: additional parallax voting unit
- 510: **road edge additional voting unit**
- 520: road surface paint reduction unit
- 530: obstacle type interpolation voting unit
- 540: individual obstacle interpolation voting unit
- 550: local area interpolation voting unit
- 600: object detection unit
- 700: alarm control unit

## Claims

1. An external environment recognition device comprising:
a texture area segmentation unit that segments external environment information into a plurality of texture areas for individual textures specified from the external environment information acquired from an external environment information acquisition unit;
a parallax generation unit that generates a parallax according to a depth distance of an external environment, based on the external environment information;
a parallax voting unit that votes a parallax according to a depth distance of an object, the depth distance being specified from the external environment information, in a voting space having one axis representing the depth distance of the external environment;
an additional parallax voting unit that votes an additional parallax in the voting space in which the parallax has been voted, the additional parallax being voted based on a texture area; and
an object detection unit that detects the object, based on a number of parallax votes given in the voting space, thereby recognizing the external environment.

2. The external environment recognition device according to claim 1, wherein
the additional parallax voting unit adds a parallax that is weighted based on the texture area.

3. The external environment recognition device according to claim 2, wherein
the additional parallax voting unit interpolates a parallax missing part present in a part corresponding to the texture area of a parallax image having one axis representing the depth distance, with a parallax present in a direction of the axis representing the depth distance of the parallax image, and votes an additional parallax with respect to each texture area where the parallax missing part is interpolated.

4. The external environment recognition device according to claim 2, wherein
the additional parallax voting unit interpolates a parallax missing part present in a part corresponding to the texture area in the parallax image having one axis representing the depth distance, with a parallax around the parallax missing part, the parallax being present in the same object in which the parallax missing part is present, and votes an additional parallax with respect to each texture area where the parallax missing part is interpolated.

5. The external environment recognition device according to claim 3, wherein
the texture area segmentation unit includes:
a locally similar texture area segmentation unit that segments the external environment information into the texture areas for individual locally similar textures;
a semantic area segmentation unit that segments the external environment information into semantic areas for individual object types; and
an individual object area segmentation unit that segments the external environment information into individual object areas for individual objects.

6. The external environment recognition device according to claim 5, wherein
the additional parallax voting unit includes a reduction unit that reduces a number of parallax votes given with respect to a road sign.

7. The external environment recognition device according to claim 5, wherein
when the additional parallax voting unit confirms from a three-dimensional point group distribution that a plurality of the texture areas or of the individual object areas are included in the same object, the additional parallax voting unit votes a valid parallax in the voting space, as a parallax of the same object.

8. The external environment recognition device according to claim 5, wherein
when the additional parallax voting unit estimates planes or curved surfaces of the texture areas, and confirms that a plurality of the texture areas are included in the same object, based on a number and a distance of a group of three-dimensional points located distant from the estimated planes or curved surfaces, the additional parallax voting unit votes a valid parallax in the voting space, as a parallax of the same object.

9. The external environment recognition device according to claim 5, wherein
when the additional parallax voting unit confirms that a size of the individual object area is present as a size of an individual object, based on a three-dimensional point group distribution, the additional parallax voting unit votes a valid parallax in the voting space, as a parallax of the individual object.

10. The external environment recognition device according to claim 5, wherein
the voting space has another axis representing an angle at which the external environment information acquisition unit is able to acquire the external environment information or a lateral position of an image in a case where the external environment information is the image.

11. The external environment recognition device according to claim 5, wherein
the external environment information acquisition unit acquires information detected by a sensing device and information detected by a different sensing device, as external environment information.

12. The external environment recognition device according to claim 11, wherein
the sensing device is a first camera and the different sensing device is a second camera disposed in a horizontal direction relative to the first camera, and wherein
the external environment information acquisition unit acquires images of an external environment that are captured by the first camera and the second camera, as the external environment information.

13. The external environment recognition device according to claim 11, wherein
the sensing device is a monocular camera and the different sensing device is a measuring device that measures a distance to the object, based on a distribution of a group of three-dimensional points, the distribution being obtained by emitting an electromagnetic wave onto the object, and wherein
the external environment information acquisition unit acquires an external environment image captured by the monocular camera and a distribution of the group of three-dimensional points, the distribution being outputted from the measuring device, as the external environment information.

14. An external environment recognition method executed by an external environment recognition device, the method comprising:
a process of causing an external environment information acquisition unit to acquire external environment information;
a process of segmenting the external environment information into a plurality of texture areas for individual textures of objects indicated in the external environment information;
a process of generating a parallax according to a depth distance of an external environment, based on the external environment information;
a process of voting the parallax according to the depth distance of an object, the depth distance being specified from the external environment information, in a voting space having one axis representing the depth distance of the external environment;
an additional parallax voting unit that votes an additional parallax in the voting space in which the parallax has been voted, the additional parallax being voted based on the texture area; and
a processing unit that detects the object, based on a number of parallax votes given in the voting space, thereby recognizing the external environment.
